# EUROPÄISCHE PATENTSCHRIFT

(11) **EP 3 094 516 B1**
(45) Veröffentlichungstag und Bekanntmachung des Hinweises auf die Patenterteilung: **15.04.2020**
(21) Anmeldenummer: 14700648.0
(22) Anmeldetag: 15.01.2014
(51) Int. Cl.: B60K 37/06, G06F 3/0488, G06F 3/038, G06F 3/0481

(54) **VERFAHREN UND VORRICHTUNG ZUR RÜCKMELDUNG EINER EINGABE AN EINEN ANWENDER**
METHOD AND DEVICE FOR PROVIDING A USER WITH FEEDBACK ON AN INPUT
PROCÉDÉ ET DISPOSITIF POUR ACCUSER RÉCEPTION D'UNE ENTRÉE DE DONNÉES À UN UTILISATEUR

(43) Veröffentlichungstag der Anmeldung: 23.11.2016
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE)
(86) Internationale Anmeldenummer: PCT/EP2014/050674
(87) Internationale Veröffentlichungsnummer: WO 2015/106804

(56) Entgegenhaltungen:
- EP-A2- 2 648 086
- DE-A1-102010 011 039

## Beschreibung

Die vorliegende Erfindung betrifft eine Vorrichtung und ein Verfahren zur Rückmeldung einer Eingabe an einen Anwender. Insbesondere betrifft die vorliegende Erfindung eine platzsparende und intuitive Möglichkeit zur Information eines Anwenders über die Eingabe sowie zum Anregen einer durch einen Anwender auszuführenden Wischgeste.

### Stand der Technik

Moderne Fortbewegungsmittel (Pkw, Lkw etc.) weisen häufig berührungsempfindliche Anwenderschnittstellen auf, auf welchen wahlfrei Inhalte zu fahrzeugbezogenen Funktionsumfängen dargestellt werden können. Unterschiedliche Funktionsumfänge werden insbesondere in Form flächig geschlossener Einheiten ("Kacheln") als Anzeigeelemente dargestellt. Zur Auswahl dargestellter Funktionsumfänge sowie zur Erhöhung der Anwenderakzeptanz können die Anzeigeelemente mitunter durch den Anwender neu angeordnet werden. Hierzu sind unterschiedliche Bedienschritte vorgesehen. Für mit aktuellen Multimediatechnologien nicht vertraute Anwender ist es ohne Studium eines Anwenderhandbuches häufig nicht intuitiv ersichtlich, dass überhaupt die Möglichkeit einer Neuanordnung von Anzeigeelementen besteht. Sofern die Anwender nicht die erforderliche Geduld zum Studium eines Anwenderhandbuches aufbringen, verbleiben viele zur Verbesserung des Anwendererlebnisses implementierte Funktionen ungenutzt.

DE 10 2007 039 444 A1 zeigt ein Verfahren zum Anzeigen von Informationen in einem Kraftfahrzeug, bei welchem Anzeigeelemente auf einer Anzeigeeinheit von einer Vorderseite auf eine Rückseite gedreht werden können, um von einem Anzeigefeld zu einem Bedienfeld einer Funktionseinheit zu gelangen. Hierzu ist ein Drehwinkel von 180° eines eben ausgestalteten Anzeigeelementes vorgesehen.

DE 10 2008 050 365 A1 offenbart eine Vorrichtung zum Anzeigen von Informationen in einem Fahrzeug, das vor der Auswahl eines auf einer Anzeigeeinheit angezeigten Anzeigeelementes das Anzeigeelement von einer Seite auf eine andere Seite aufweisend andere Informationen umdreht. Beispielsweise kann ein flächiges Objekt perspektivisch um 180° gedreht werden.

DE 10 2010 011 039 A1 offenbart ein Verfahren und eine Vorrichtung zum Betreiben einer Benutzerschnittstelle, bei welcher eine dauerhafte Änderung einer Perspektive eines angezeigten graphischen Objektes für den Fall vorgesehen ist, dass der Anwender eine anwenderpositionsabhängige Darstellung anwählt oder diese automatisch vorgenommen wird. Die Drehung kann in einer animierten Form erfolgen und das graphische Objekt in einen Endzustand bringen, um die Interpretation der darin enthaltenen Informationen aus Sicht des aktuellen Anwenders zu erleichtern.

EP 2 648 086 A2 offenbart eine graphische Anwenderschnittstelle, bei welcher unter anderem vorgeschlagen wird, im Ansprechen auf eine vordefinierte Anwendereingabe eine Rotation dargestellter Schaltflächen derart vorzunehmen, dass eine Rückseite desselben angezeigt wird. Insbesondere wird eine Drehung um 180° vorgeschlagen.

Die Möglichkeiten zur Rückmeldung einer Eingabe an einen Anwender werden durch die vorbekannten Maßnahmen nicht in zufriedenstellendem Umfang ausgeschöpft.

Es ist daher eine Aufgabe der vorliegenden Erfindung, eine platzsparende Rückmeldung einer Eingabe an einen Anwender auf der Oberfläche einer Anzeigeeinheit bereitzustellen.

Es ist eine weitere Aufgabe der Erfindung, eine spielerische Anregung zum Verschieben auf einer Anzeigeeinheit dargestellter Anzeigeelemente bereitzustellen.

Es ist eine weitere Aufgabe der Erfindung, eine bessere Erkennbarkeit eines Anzeigeelementes vor einem Re-arrangieren des Anzeigeelementes zu ermöglichen.

Es ist eine weitere Aufgabe der vorliegenden Erfindung, Fahrsituationskenngrößen anschaulich und spielerisch darzustellen.

### Offenbarung der Erfindung

Die vorstehend genannten Aufgaben werden erfindungsgemäß durch ein Verfahren zur Rückmeldung einer Eingabe an einen Anwender sowie durch eine entsprechende Vorrichtung und ein Fortbewegungsmittel gelöst. Das Verfahren umfasst ein Auswerten einer Eingabe. Die Eingabe kann beispielsweise eine Anwendereingabe sein, welche der Anwender auf einer berührungsempfindlichen Oberfläche einer Anzeigeeinheit vornimmt. Dabei kann der Anwender ein bestimmtes auf der Anzeigeeinheit angezeigtes Anzeigeelement auswählen. Eine im Rahmen der vorliegenden Erfindung befindliche alternative Eingabe ist beispielserweise eine betriebssituationsabhängige Kenngröße eines Fahrzeugs. Beispielsweise können physikalische Kenngrößen des Betriebszustandes als Eingabe verwendet werden. Insbesondere eine Beschleunigung bzw. Verzögerung ("G-Kräfte") des Fahrzeugs können als Eingabe verwendet werden. Ebenso können eine Drehzahl eines Motors eines Fortbewegungsmittels oder Schallpegel (z.B. einer Klangwiedergabeeinrichtung) als Eingabe verwendet werden. In einem zweiten Schritt wird die Eingabe klassifiziert. Hierbei wird die Eingabe dahingehend bewertet, ob eine Rückmeldung an den Anwender angezeigt ist. Beispielsweise kann eine Größe einer der vorgenannten Eingaben vordefiniert sein, ab welcher eine Rückmeldung erfolgt. Sofern die Eingabe beispielsweise eine Interaktion des Anwenders mit einer grafischen Benutzeroberfläche betrifft, kann das Klassifizieren eine Position auf der Oberfläche bzw. einer Position innerhalb eines auf der Oberfläche angezeigten Anzeigeelementes umfassen. Je nach ermittelter Klasse erfolgt die Rückmeldung in Form eines Modifizierens einer Ausrichtung einer Oberfläche eines auf einer Anzeigeeinheit eines Fortbewegungsmittels angezeigten Anzeigeelementes. Das Fortbewegungsmittel kann beispielsweise ein Fahrzeug (z.B. Pkw, Lkw) sein, dessen zentrales Informationsdisplay (CID) und/oder Kombiinstrument als Anzeigeeinheit verwendet wird. Das erfindungsgemäß in seiner Ausrichtung modifizierte Anzeigeelement kann beispielsweise eine Kachel sein, welche einen bestimmten Funktionsumfang in einem Menü einer Anwenderschnittstelle darstellt. Das Anzeigeelement muss dabei nicht zwangsläufig bezüglich seiner Primärfunktion auf die Eingabe reagieren. Vielmehr wird das Anzeigeelement bevorzugt zusätzlich dafür verwendet, neben seiner Primärfunktion auch die erfindungsgemäß zurückzumeldende Eingabe zu visualisieren. Durch die Ausrichtung der Oberfläche des Anzeigeelementes wird dem Anwender nicht lediglich die Eingabe rückgemeldet, sondern auch die Möglichkeit nahegelegt, das Anzeigeelement als mobile Einheit zu verstehen, welche innerhalb der Anzeigeeinheit an einen anderen Ort gebracht (z.B. geschoben, gezogen) werden kann. Das Modifizieren der Ausrichtung wird nach dem Beenden der Eingabe automatisch rückgängig gemacht. Liegt also eine Eingabe oberhalb eines Minimalwertes für eine Rückmeldung nicht mehr an, kehrt das Anzeigeelement in seine ursprüngliche Ausrichtung zurück. Erfindungsgemäß ergeben sich eine Vielzahl von Szenarien und Möglichkeiten, welche über Lösungen zu den eingangs genannten Aufgaben hinaus noch weitere Vorteile mit sich bringen, wie im Folgenden gezeigt wird.

Die Unteransprüche zeigen bevorzugte Weiterbildungen der Erfindung.

Erfindungsgemäss wird das Modifizieren der Ausrichtung im Ansprechen auf ein Beenden der Eingabe, automatisch rückgängig gemacht. Liegt also eine Eingabe oberhalb eines Minimalwertes für eine Rückmeldung nicht mehr an, kehrt das Anzeigeelement in seine ursprüngliche Ausrichtung zurück. Dies kann insbesondere in umgekehrter Richtung erfolgen, wobei die zur Modifikation der Ausrichtung durchgeführte Bewegung rückwärts unteren Bereich aufgehängten mechanischen Element bei einer Bremsung mit seiner Oberkante in Fahrtrichtung kippen und entsprechend bei starker Beschleunigung mit seiner Oberkante in Richtung des Fahrzeuginnenraums kippen. Wird eine Anwendereingabe auf dem Anzeigeelement selbst (beispielsweise mittels einer berührungsempfindlichen Oberfläche) als Eingabe rückgemeldet, kann die Modifikation in Abhängigkeit der Position der Eingabe auf dem Anzeigeelement erfolgen. Dies kann beispielsweise so ausgeführt werden, als würde das Anzeigeelement etwa in der Mitte seiner Fläche schwenk- bzw. kippbar gelagert sein. Ähnlich einer Wippe führt eine Eingabe des Anwenders auf einem ersten Flächenbereich des Anzeigeelementes zu dessen Niederdrücken, während ein diametral gegenüberliegender Flächenbereich des Anzeigeelementes quasi optisch aus der Darstellungsebene hervortritt. Hierbei kann das Anzeigeelement im Wesentlichen steif oder auch in unterschiedlichen Abstufungen elastisch ausgestaltet sein, so dass unterschiedliche Materialparameter suggeriert werden, obwohl die Anzeigeelemente sämtlich in Software realisiert sind. Beispielsweise kann ein Spannen des Elementes und anschließendes Hochschnellen des gegenüberliegenden Flächenbereiches (auch durch eine korrespondierende Klangausgabe untermalt) vorgesehen sein, um das Anzeigeelement lebendiger und mobiler zu gestalten. Die vorgenannten Ausgestaltungen erhöhen die Rückmeldungsagilität der Anwenderschnittstelle und die Interaktionsfreude (engl. "Joy-of-Use") des Anwenders.

Die Klassifikation der Eingabe kann also sowohl einem Grad einer zu vollziehenden Kipp-/Schwenkbewegung als auch einer Richtung der zu vollziehenden Kipp-/Schwenkbewegung des Anzeigeelementes zugeordnet sein. Auf diese Weise wird eine qualitative und quantitative Rückmeldung für die Eingabe erzeugt und die Anwendung der Anzeigeeinheit spielerisch gestaltet.

Das Anzeigeelement kann beispielsweise eine Kachel einer geteilten Ansicht auf der Anzeigeeinheit sein. Üblicherweise werden mehrere Kacheln dargestellt, um Funktionseinheiten bzw. Sinneinheiten auf einer Anzeigeeinheit gegeneinander abzugrenzen. In einem Konfigurationsmodus, in welchem die Kacheln neu arrangiert werden können, werden die Kacheln häufig um weitere Informationen ergänzt, um dem Anwender das Neuanordnen der Inhalte wunschgemäß zu vereinfachen. Dabei haben die im Rahmen der vorliegenden Erfindung auch als "Kacheln" bezeichneten Anzeigeelemente keine primäre Zuordnung zur Rückmeldung der Eingabe. Sie bilden somit insbesondere keinen eigens zur Anzeige von Fahrsituationsparametern vorgesehenen Teil eines Funktionsumfangs einer Anwenderschnittstelle. Auf diese Weise werden erfindungsgemäß durch die Kacheln gleichzeitig mehrere Informationen wiedergegeben, wodurch Platz auf der Anzeigeeinheit eingespart werden kann.

Sofern das Anzeigeelement in einer Konfigurationsansicht dargestellt wird, veranschaulicht das erfindungsgemäße Modifizieren der Ausrichtung der Oberfläche der Anzeigeelemente im Ansprechen auf die Eingabe die Mobilität der Anzeigeelemente und ermuntert den Anwender somit zur spielerischen Interaktion mit der Konfigurationsansicht. Anwender werden daher in intuitiver und eleganter Weise zur Neuanordnung der Anzeigeelemente motiviert.

Die Eingabe kann mittels eines Bewegungssensors (Geschwindigkeitssensor) und/oder eines Beschleunigungssensors und/oder eines Lagesensors und/oder eines Lenkwinkelsensors erfasst werden und die erfasste Messgröße beispielsweise über einen Kommunikationsbus eines Fortbewegungsmittels ermittelt werden. Je nach Ausstattung des Fortbewegungsmittels liegen einzelne oder sämtliche der vorgenannten Informationen ohnehin auf dem jeweiligen Bussystem, so dass auf vorhandene Sensorik für die Erzeugung erfindungsgemäß verwendbarer Eingaben zurückgegriffen werden kann.

Insbesondere für den Fall, dass fahrsituationsbedingte Eingaben verwendet werden, kann das Modifizieren der Ausrichtung eine Vielzahl der auf der Anzeigeeinheit dargestellten Anzeigeelemente betreffen. Dabei können die Anzeigeelemente im Wesentlichen dieselbe Bewegung durchführen oder zur Wahrung einer natürlichen Darstellung in vordefinierter oder (zumindest anteilig) zufälliger Weise gegeneinander veränderte Bewegungsmuster erhalten.

Sofern die Eingabe eine mittels einer Bedieneinheit durch einen Anwender gemachte Eingabe ist, können vordefinierte Teilflächen eines jeweiligen Anzeigeelementes vordefiniert sein, bei deren Betätigen durch den Anwender ein jeweiliges vordefiniertes Bewegungsmuster zur Modifikation der Ausrichtung verwendet wird. Auf diese Weise erfolgt die Ausrichtung des Anzeigeelementes in Abhängigkeit derjenigen Position, auf welche sich die Eingabe des Anwenders bezieht. Dies bietet den Vorteil, dass Anwender beim Betätigen eines Anzeigeelementes einen Hinweis auf die Mobilität desselben erhalten und zudem noch eine perspektivische Änderung einer Darstellung der Anzeigeelement zur Verbesserung der Ablesbarkeit enthaltener Informationen bewirken können.

Gemäß einem zweiten Aspekt der vorliegenden Erfindung wird eine Vorrichtung zur Rückmeldung einer Eingabe an einen Anwender vorgeschlagen. Die Vorrichtung umfasst eine Empfangseinheit zum Auswerten der Eingabe. Die Empfangseinheit kann beispielsweise an einen Kommunikationsbus des Fortbewegungsmittels angeschlossen sein. Alternativ oder zusätzlich kann die Empfangseinheit als berührungsempfindliche Oberfläche einer Anzeigeeinheit oder als ein in sonstiger Weise durch einen Anwender bedienbare Einrichtung ausgestaltet sein. Selbstverständlich können einzelne oder sämtliche der in Verbindung mit dem erstgenannten Erfindungsaspekt ausgeführten Eingaben durch die Empfangseinheit der erfindungsgemäßen Vorrichtung erkannt und ausgewertet werden. Weiter ist eine Anzeigeeinheit in der erfindungsgemäßen Vorrichtung vorgesehen, welche für die Montage in einem Fortbewegungsmittel eingerichtet ist. Dies kann eine herstellerseitige und/oder eine anwenderseitige Montage umfassen. Beispielsweise kann die Anzeigeeinheit als zentrales Informationsdisplay ("central information display", CID) und/oder als Matrixdisplay in einem Kombiinstrument ausgestaltet sein. Zusätzlich ist eine Verarbeitungseinheit vorgesehen, welche beispielsweise einen programmierbaren Prozessor (z.B. Mikroprozessor, Nanoprozessor) umfasst. Die Verarbeitungseinheit ist eingerichtet, die mittels der Empfangseinheit empfangene Eingabe auszuwerten, diese zu klassifizieren und in Abhängigkeit der ermittelten Klasse eine Ausrichtung einer Oberfläche eines auf der Anzeigeeinheit angezeigten Anzeigeelementes zu modifizieren. Auf diese Weise ergeben sich dieselben Merkmale, Merkmalskombinationen und die sich aus diesen ergebenden Vorteile, wie sie oben in Verbindung mit dem erstgenannten Erfindungsaspekt ausgeführt worden sind.

Gemäß einem dritten und einem vierten Aspekt der vorliegenden Erfindung werden ein Computerprogrammprodukt und eine Signalfolge unter Schutz gestellt, welche Instruktionen umfassen bzw. repräsentieren, welche, wenn sie durch eine Verarbeitungseinheit einer erfindungsgemäßen Vorrichtung eingelesen werden, die Verarbeitungseinheit einrichten, die Schritte eines Verfahrens gemäß dem erstgenannten Erfindungsaspekt durchzuführen. Auf diese Weise werden in Datenform gespeicherte und über Telekommunikationsnetzwerke zur Verfügung gestellte Instruktionen unter Schutz gestellt, welche bei ihrer Ausführung das erfindungsgemäße Verfahren verwirklichen.

Gemäß einem fünften Aspekt der vorliegenden Erfindung wird ein Fortbewegungsmittel vorgeschlagen, welches mindestens eine Vorrichtung gemäß dem zweitgenannten Erfindungsaspekt aufweist. Das Fortbewegungsmittel kann beispielsweise als straßenzugelassenes Fahrzeug (Pkw, Lkw o.Ä.) ausgeführt sein. Die Merkmale, Merkmalskombinationen sowie die sich aus diesen ergebenden Vorteile entsprechen den in Verbindung mit der erfindungsgemäßen Vorrichtung ausgeführten derart ersichtlich, dass zur Vermeidung von Wiederholungen auf die obigen Ausführungen verwiesen.

Die vorliegende Erfindung ermöglicht eine platzsparende Rückmeldung durch (ohnehin bereits angezeigte) Elemente, welche neben ihrer jeweiligen Primärfunktion zur Rückmeldung als Sekundärfunktion in ihrer Ausrichtung modifiziert werden. Zudem ist die Anlehnung an korrespondierende mechanische Elemente für die Anzeigeelemente eine besonders intuitive Form der Rückmeldung, welche sich für den Anwender ohne weitere Erklärung erschließt. Zudem fördert die perspektivische Darstellung bei der Bedienung durch den Anwender eine Ablesbarkeit bzw. Erkennbarkeit der auf den Anzeigeelementen dargestellten Funktionen. Die Verwendung von Fahrzustandskenngrößen als Eingabe macht den Anwender zusätzlich auf die Mobilität der Anzeigeelemente aufmerksam und stellte sozusagen ein Anwendertraining dar. In Versuchen haben sich für die Modifikation der Ausrichtung der Oberfläche der Anzeigeelemente Kippgrade bzw. Schwenkgrade in Bereichen zwischen 5° und 45°, bevorzugt zwischen 10° und 35°, äußerst bevorzugt zwischen 15° und 25°, als besonders geeignet herausgestellt.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten eines Ausführungsbeispiels eines erfindungsgemäßen Fortbewegungsmittels;
- Figur 2: ein Flussdiagramm veranschaulichend Schritte eines Ausführungsbeispiels eines erfindungsgemäßen Verfahrens;
- Figur 3: eine exemplarische Ansicht auf einer Anzeigeeinheit; und
- Figur 4 bis 6: Ausführungsbeispiele von Anwenderinteraktionen mit der in Figur 3 dargestellten Ansicht.

### Ausführungsformen der Erfindung

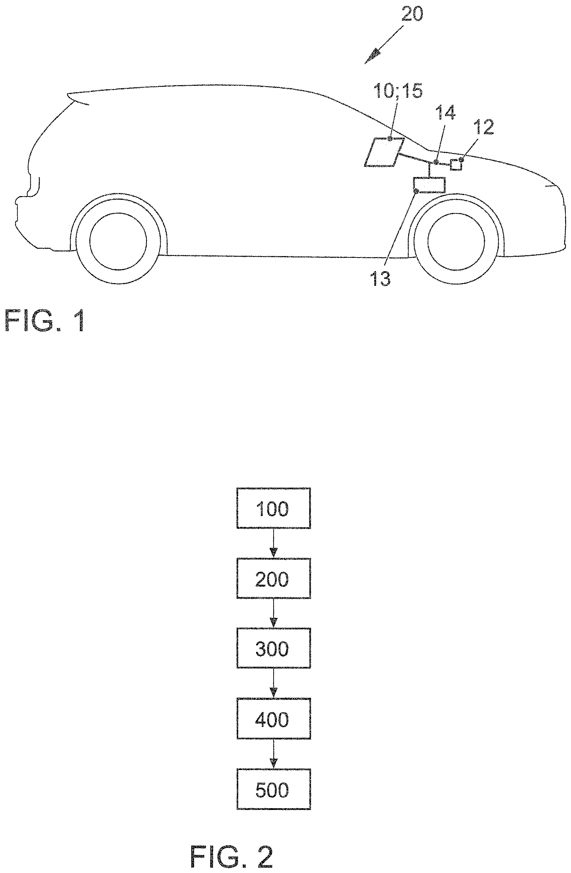

Figur 1 zeigt ein Fahrzeug 20 als Fortbewegungsmittel, in dessen Armaturenbrett ein Display 10 als Anzeigeeinheit mit einer berührungsempfindlichen Oberfläche 15 als Teil einer Empfangseinheit angeordnet ist. Über einen Bus 14 ist das Display 10 an einen Beschleunigungssensor 12 als Teil einer Empfangseinheit angeschlossen. Zusätzlich ist ein elektronisches Steuergerät 13 als Verarbeitungseinheit informationstechnisch mit den vorgenannten Komponenten wirkverbunden. Die berührungsempfindliche Oberfläche 15 dient ebenso wie der Beschleunigungssensor 12 als Empfangseinheit für Eingaben, für deren Rückmeldung an den Anwender auf dem Display 10 dargestellte Anzeigeelemente erfindungsgemäß vorgesehen sind.

Figur 2 zeigt ein Flussdiagramm veranschaulichend Schritte eines Ausführungsbeispiels eines erfindungsgemäßen Verfahrens. In Schritt 100 wird eine Eingabe ausgewertet, wobei die Eingabe durch eine Anwenderinteraktion mit einem Eingabemittel der Anwenderschnittstelle erfolgt. In Schritt 200 wird die Eingabe dahingehend klassifiziert, auf welchem Teilbereich einer Oberfläche eines auf der Anzeigeeinheit angezeigten Anzeigeelementes die Anwendereingabe erfolgte. In Abhängigkeit der ermittelten Klasse (Teilfläche) wird in Schritt 300 eine Ausrichtung einer Oberfläche des auf der Anzeigeeinheit angezeigten Anzeigeelementes modifiziert. Dies erfolgt dahingehend, dass der durch die Anwendereingabe adressierte Flächenbereich des Anzeigeelementes am stärksten in die Darstellungsebene hineingedrückt wird, während ein dem Flächenschwerpunkt des Anzeigeelementes gegenüberliegender Teilbereich am weitesten aus der Darstellungsebene hervorgehoben dargestellt wird. Die übrigen Teilbereiche des Anzeigeelementes werden einer linearen Funktion entsprechend den Hebelgesetzen anteilig in ihrer Lage modifiziert, so dass das Anzeigeelement als steife Kachel animiert wird. In Schritt 500 beendet der Anwender die Eingabe, indem er seine Hand von der berührungsempfindlichen Oberfläche der Anzeigeeinheit abhebt. Entsprechend kippt die Kachel in umgekehrter Richtung in ihre Ausgangsposition zurück, so dass sämtliche Oberflächenbereiche des Anzeigeelementes plan bzw. parallel zur Anzeigefläche erscheinen.

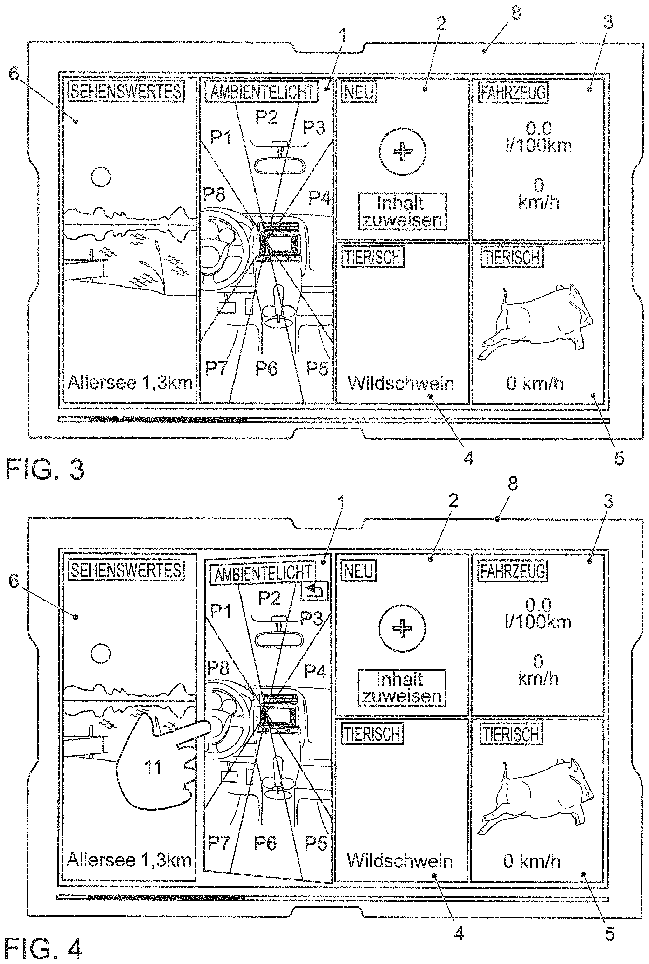

Figur 3 zeigt eine mögliche auf einer Anzeigeeinheit 10 (seihe Fig. 1) dargestellte Ansicht 8 mehrerer Anzeigeelemente in Form von Kacheln 1, 2, 3, 4, 5, 6. Eine erste Kachel 1 ist einem Funktionsbereich "Ambientelicht" zugeordnet. Eine zweite Kachel 2 weist derzeit keinen Inhalt auf, was durch ein "+"-Zeichen sowie den Text "Inhalt zuweisen" verdeutlicht wird. Eine dritte Kachel 3 ist dem Bordcomputer zugeordnet und stellt aktuelle Verbrauchs- und Geschwindigkeitswerte dar. Eine vierte Kachel 4 und eine fünfte Kachel 5 zeigen Informationen zur Fauna. Während die vierte Kachel 4 den Schriftzug "Wildschwein" zeigt, sind in der fünften Kachel 5 ein Wildschirm und die aktuelle Fahrzeuggeschwindigkeit in einer teiltransparenten Textfelddarstellung zu erkennen. Eine sechste Kachel 6 zeigt Sehenswertes in der näheren Umgebung sowie die Ortsangabe und eine aktuelle Entfernung von diesem Ort. Zur Veranschaulichung einzelner Oberflächenbereiche am Beispiel der ersten Kachel 1 ist diese in acht Sektoren P1, P2, P3, P4, P5, P6, P7, P8 eingeteilt. Diese sind derartig angeordnet, dass die vier Ecken sowie die vier Seitenhalbierenden der rechteckförmigen ersten Kachel 1 jeweils auf der Winkelhalbierenden zwischen den jeweiligen Grenzen der dargestellten Oberflächenbereiche P1, P2, P3, P4, P5, P6, P7, P8 liegen. Eine zum Modifizieren der Ausrichtung der ersten Kachel 1 definierte Aufhängung ist im Flächenschwerpunkt der ersten Kachel 1 angeordnet, in welchem sich der Schnittpunkt der acht Sektoren P1, P2, P3, P4, P5, P6, P7, P8 befindet. Virtuell bildet dieser Punkt also ein Auflager, um welches die erste Kachel 1 zur Modifikation ihrer Ausrichtung schwenken und kippen kann.

Figur 4 zeigt einen ersten Bedienschritt, welchen der Anwender in Verbindung mit der in Figur 3 gezeigten Ansicht 8 ausführen kann. Hierzu drückt der Anwender mit seiner Hand 11 auf den mit P8 gekennzeichneten Sektor der ersten Kachel 1. Erkennbar ist die gesamte linke Kante der ersten Kachel 1 in die Anzeigeebene hineingerückt worden, während die gesamte rechte Kante der ersten Kachel 1 optisch aus der Anzeigeebene hervorsteht. Mit anderen Worten hat die erste Kachel 1 eine Schwenkbewegung um eine vertikal (von unten nach oben) in der Anzeigeebene liegende Achse vollzogen.

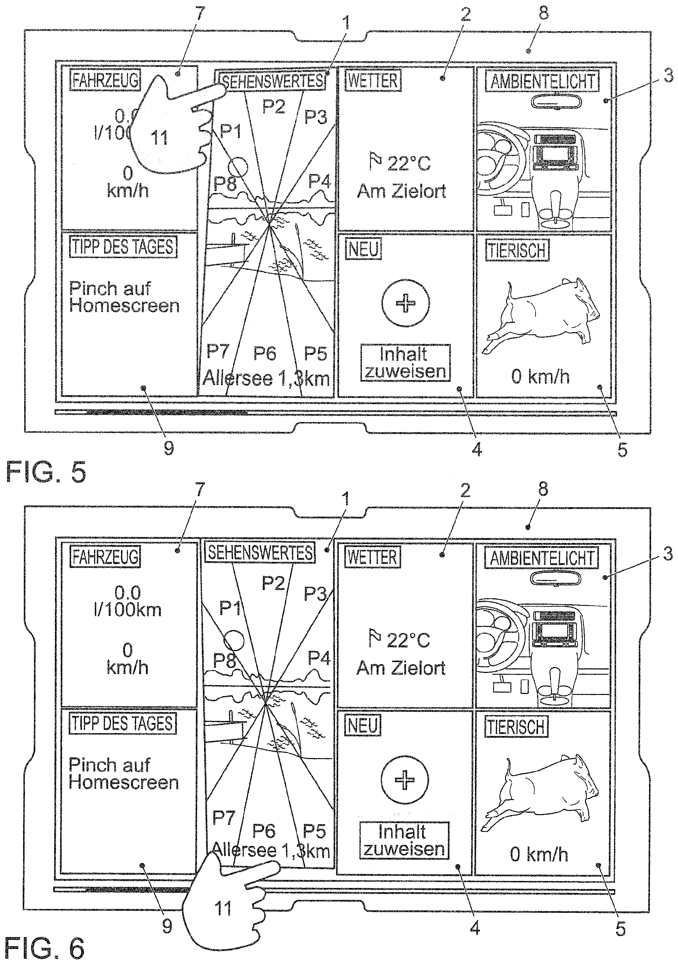

Figur 5 zeigt einen alternativen Bedienschritt, in welchem die Hand 11 des Anwenders den mit P1 gekennzeichneten Sektor der ersten Kachel 1 niederdrückt. Entsprechend hat die erste Kachel 1 gleichzeitig eine Kippbewegung um eine horizontal in der Anzeigeebene liegende Achse und eine Schwenkbewegung um eine vertikal in der Anzeigeebene liegende Achse (entsprechend dem in Figur 4 dargestellten Bedienschritt) vollzogen. Die untere rechte Ecke der ersten Kachel 1 steht nun alleinig am weitesten aus der Anzeigeebene hervor. Nicht dargestellte Anwenderinteraktionen haben zuvor die auf der ersten Kachel 1 dargestellten Informationen von "Ambientelicht" in "Sehenswertes" geändert. Zudem wurde die bisherige sechste Kachel 6 gegen eine siebente Kachel 7, auf welcher nun die zuvor auf der dritten Kachel 3 anzeigten Informationen angezeigt werden, und eine achte Kachel 9, auf welcher ein "Tipp des Tages" angezeigt wird, ausgetauscht. Während die zweite Kachel 2 nun Wetterinformationen anzeigt, ist der Inhalt der vierten Kachel 4 gelöscht worden. Die Informationen des Ambientelichtes werden nun auf der dritten Kachel 3 dargestellt.

Figur 6 zeigt einen dritten möglichen Eingabeschritt in Verbindung mit der dargestellten Ansicht 8, bei welchem die Hand 11 des Anwenders die mit P6 bezeichnete Sektion der ersten Kachel 1 niederdrückt. Entsprechend vollzieht die erste Kachel 1 eine Kippbewegung um eine horizontal in der Anzeigeebene gelegene Achse, bei welcher die Unterkante der ersten Kachel 1 am weitesten in die Anzeigeebene hineingedrückt und die obere Kante der ersten Kachel 1 am weitesten aus der Anzeigeebene herausgedrückt wird.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: erste Kachel
- 2: zweite Kachel
- 3: dritte Kachel
- 4: vierte Kachel
- 5: fünfte Kachel
- 6: sechste Kachel
- 7: siebente Kachel
- 8: Ansicht
- 9: achte Kachel
- 10: Display
- 11: Hand des Anwenders
- 12: Beschleunigungssensor
- 13: elektronisches Steuergerät
- 14: Bus
- 15: berührungsempfindliche Oberfläche
- 20: Fahrzeug
- 100-500: Verfahrensschritte
- P1-P8: Sektionen der ersten Kachel

## Patentansprüche

1. Verfahren zur Rückmeldung einer Eingabe an einen Anwender umfassend die Schritte:
- Auswerten (100) der Eingabe,
- Klassifizieren (200) der Eingabe und in Abhängigkeit der ermittelten Klasse
- Modifizieren (300) einer Ausrichtung einer Oberfläche eines auf einer Anzeigeeinheit (10) eines Fortbewegungsmittels (20) angezeigten Anzeigeelementes (1, 2, 3, 4, 5, 6, 7, 9), wobei das Modifizieren der Ausrichtung nach einem Beenden der Eingabe automatisch rückgängig gemacht (400) wird.

2. Verfahren nach Anspruch 1, wobei das Modifizieren der Ausrichtung im Ansprechen auf ein Beenden der Eingabe, automatisch, insbesondere in umgekehrter Richtung, rückgängig gemacht (400) wird.

3. Verfahren nach einem der Ansprüche 1 oder 2, wobei das Modifizieren (300) der Ausrichtung eine Rotation des Anzeigeelementes (1, 2, 3, 4, 5, 6, 7, 9) um eine in einer Oberfläche der Anzeigeeinheit (10) gelegene Achse umfasst.

4. Verfahren nach einem der vorstehenden Ansprüche, wobei das Klassifizieren (200) der Eingabe hinsichtlich einer Intensität der Eingabe und/oder einer Position (P1, P2, P3, P4, P5, P6, P7, P8) der Eingabe auf dem Anzeigeelement (1, 2, 3, 4, 5, 6, 7, 9) erfolgt.

5. Verfahren nach einem der vorstehenden Ansprüche, wobei das Anzeigeelement (1, 2, 3, 4, 5, 6, 7, 9) eine Kachel einer geteilten, insbesondere in einem Konfigurationsmodus befindlichen, Ansicht auf der Anzeigeeinheit (10) ist und insbesondere das Modifizieren (300) der Ausrichtung keinen Bezug zum auf der Kachel angezeigten Funktionsumfang aufweist.

6. Verfahren nach einem der vorstehenden Ansprüche, wobei das Anzeigeelement (1, 2, 3, 4, 5, 6, 7, 9) in einer Konfigurationsansicht dargestellt wird, wobei die Konfigurationsansicht insbesondere ein Verschieben des Anzeigeelementes (1, 2, 3, 4, 5, 6, 7, 9) an eine andere Stelle auf der Anzeigeeinheit (10) ermöglicht.

7. Verfahren nach einem der vorstehenden Ansprüche, wobei die Eingabe eine mittels eines Bewegungssensors und/oder Beschleunigungssensors (12) und/oder Lagesensors und/oder eines Lenkwinkelsensors erfasste Messgröße ist, welche insbesondere über einen Bus (14) eines Fortbewegungsmittels (20) ermittelt wird.

8. Verfahren nach einem der vorstehenden Ansprüche, wobei im Ansprechen auf die Eingabe die Ausrichtung einer Vielzahl auf der Anzeigeeinheit (10) dargestellter Anzeigeelemente (1, 2, 3, 4, 5, 6, 7, 9) modifiziert wird.

9. Verfahren nach einem der vorstehenden Ansprüche, wobei die Eingabe mittels einer der Anzeigeeinheit (10) zugeordneten Bedieneinheit (15) erfolgt.

10. Verfahren nach einem der vorstehenden Ansprüche, wobei die Eingabe einer Position (P1, P2, P3, P4, P5, P6, P7, P8) aus einer Vielzahl auf einem Anzeigeelement (1, 2, 3, 4, 5, 6, 7, 9) angeordneter Positionen (P1, P2, P3, P4, P5, P6, P7, P8) zugeordnet wird und die Ausrichtung des Anzeigeelementes (1, 2, 3, 4, 5, 6, 7, 9) in Abhängigkeit der Position (P1, P2, P3, P4, P5, P6, P7, P8) modifiziert wird.

11. Vorrichtung zur Rückmeldung einer Eingabe an einen Anwender umfassend:
- eine Empfangseinheit (12, 15) zum Auswerten der Eingabe,
- eine Anzeigeeinheit (10) für die Montage in einem Fortbewegungsmittel (20), und
- eine Verarbeitungseinheit (13), wobei die Verarbeitungseinheit (13) eingerichtet ist,
- die Eingabe auszuwerten,
- die Eingabe zu klassifizieren, und in Abhängigkeit der ermittelten Klasse
- eine Ausrichtung einer Oberfläche eines auf der Anzeigeeinheit (10) angezeigten Anzeigeelementes (1, 2, 3, 4, 5, 6, 7, 9) zu modifizieren, und nach einem Beenden der Eingabe
- das Modifizieren der Ausrichtung auf automatisch rückgängig zu machen (400).

12. Vorrichtung nach Anspruch 11, welche eingerichtet ist, ein Verfahren nach einem der Ansprüche 1 bis 10 durchzuführen.

13. Computerprogrammprodukt umfassend Instruktionen, welche, wenn sie durch einen programmierbaren Prozessor eingelesen werden, den Prozessor einrichten, die Schritte eines Verfahrens gemäß einem der Ansprüche 1 bis 10 durchzuführen.

14. Fortbewegungsmittel, insbesondere Fahrzeug (20), umfassend eine Vorrichtung nach einem der Ansprüche 11 oder 12.

## Claims

1. Method for providing feedback on an input to a user, comprising the steps of:
- evaluating (100) the input,
- classifying (200) the input and, as a function of the determined class,
- modifying (300) an orientation of a surface of a display element (1, 2, 3, 4, 5, 6, 7, 9) displayed on a display unit (10) of a means of locomotion (20), wherein the modification of the orientation is automatically undone (400) after the input is stopped.

2. Method according to Claim 1, wherein the modification of the orientation is undone (400) automatically, in particular in the reverse direction, in response to the input being stopped.

3. Method according to any one of Claims 1 or 2, wherein the modification (300) of the orientation comprises a rotation of the display element (1, 2, 3, 4, 5, 6, 7, 9) about an axis situated in a surface of the display unit (10).

4. Method according to any one of the preceding claims, wherein the classification (200) of the input takes place with respect to an intensity of the input and/or a position (P1, P2, P3, P4, P5, P6, P7, P8) of the input on the display element (1, 2, 3, 4, 5, 6, 7, 9).

5. Method according to any one of the preceding claims, wherein the display element (1, 2, 3, 4, 5, 6, 7, 9) is a tile of a divided view on the display unit (10), in particular a view in a configuration mode, and in particular the modification (300) of the orientation has no relation to the range of functions displayed on the tile.

6. Method according to any one of the preceding claims, wherein the display element (1, 2, 3, 4, 5, 6, 7, 9) is shown in a configuration view, wherein the configuration view in particular allows the display element (1, 2, 3, 4, 5, 6, 7, 9) to be moved to another location on the display unit (10).

7. Method according to any one of the preceding claims, wherein the input is a measured variable which is detected by means of a movement sensor and/or acceleration sensor (12) and/or position sensor and/or a steering-angle sensor and which is determined in particular via a bus (14) of a means of locomotion (20).

8. Method according to any one of the preceding claims, wherein the orientation of a plurality of display elements (1, 2, 3, 4, 5, 6, 7, 9) displayed on the display unit (10) is modified in response to the input.

9. Method according to any one of the preceding claims, wherein the input takes place by means of a control unit (15) associated with the display unit (10).

10. Method according to any one of the preceding claims, wherein the input is associated with a position (P1, P2, P3, P4, P5, P6, P7, P8) of a plurality of positions (P1, P2, P3, P4, P5, P6, P7, P8) arranged on a display element (1, 2, 3, 4, 5, 6, 7, 9), and the orientation of the display element (1, 2, 3, 4, 5, 6, 7, 9) is modified as a function of the position (P1, P2, P3, P4, P5, P6, P7, P8).

11. Device for providing feedback on an input to a user, comprising:
- a receiving unit (12, 15) for evaluating the input,
- a display unit (10) for installation in a means of locomotion (20), and
- a processing unit (13), wherein the processing unit (13) is configured
- to evaluate the input,
- to classify the input and, as a function of the determined class,
- to modify an orientation of a surface of a display element (1, 2, 3, 4, 5, 6, 7, 9) displayed on the display unit (10), and, after the input is stopped,
- to automatically undo (400) the modification of the orientation.

12. Device according to Claim 11, which is configured to perform a method according to any one of Claims 1 to 10.

13. Computer program product comprising instructions which, when read by a programmable processor, configure the processor to perform the steps of a method according to any one of Claims 1 to 10.

14. Means of locomotion, in particular vehicle (20), comprising a device according to any one of Claims 11 or 12.

## Revendications

1. Procédé pour accuser réception d'une entrée à un utilisateur, comprenant les étapes de :
- évaluation (100) de l'entrée,
- classification (200) de l'entrée et, en fonction de la classe déterminée,
- modification (300) d'une orientation d'une surface d'un élément d'affichage (1, 2, 3, 4, 5, 6, 7, 9) affiché sur une unité d'affichage (10) d'un moyen de locomotion (20), la modification de l'orientation étant annulée (400) automatiquement après la finalisation de l'entrée.

2. Procédé selon la revendication 1, dans lequel la modification de l'orientation est annulée (400) automatiquement, en particulier dans le sens opposé, en réponse à la finalisation de l'entrée.

3. Procédé selon l'une quelconque des revendications 1 ou 2, dans lequel la modification (300) de l'orientation comprend une rotation de l'élément d'affichage (1, 2, 3, 4, 5, 6, 7, 9) autour d'un axe situé dans une surface de l'unité d'affichage (10).

4. Procédé selon l'une quelconque des revendications précédentes, dans lequel la classification (200) de l'entrée est effectuée par rapport à une intensité de l'entrée et/ou à une position (P1, P2, P3, P4, P5, P6, P7, P8) de l'entrée sur l'élément d'affichage (1, 2, 3, 4, 5, 6, 7, 9).

5. Procédé selon l'une quelconque des revendications précédentes, dans lequel l'élément d'affichage (1, 2, 3, 4, 5, 6, 7, 9) est une tuile d'un affichage divisé, se trouvant en particulier dans un mode de configuration, sur l'unité d'affichage (10) et, en particulier, la modification (300) de l'orientation ne présente aucun rapport avec l'étendue de fonctions affichée sur la tuile.

6. Procédé selon l'une quelconque des revendications précédentes, dans lequel l'élément d'affichage (1, 2, 3, 4, 5, 6, 7, 9) est représenté dans un affichage de configuration, l'affichage de configuration permettant en particulier un déplacement de l'élément d'affichage (1, 2, 3, 4, 5, 6, 7, 9) en un autre emplacement sur l'unité d'affichage (10).

7. Procédé selon l'une quelconque des revendications précédentes, dans lequel l'entrée est une grandeur de mesure détectée au moyen d'un capteur de mouvement et/ou d'un capteur d'accélération (12) et/ou d'un capteur de position et/ou d'un capteur d'angle de braquage, laquelle est déterminée en particulier au moyen d'un bus (14) d'un moyen de locomotion (20).

8. Procédé selon l'une quelconque des revendications précédentes, dans lequel l'orientation d'une pluralité d'éléments d'affichage (1, 2, 3, 4, 5, 6, 7, 9) représentés sur l'unité d'affichage (10) est modifiée en réponse à l'entrée.

9. Procédé selon l'une quelconque des revendications précédentes, dans lequel l'entrée est effectuée au moyen d'une unité d'utilisation (15) associée à l'unité d'affichage (10).

10. Procédé selon l'une quelconque des revendications précédentes, dans lequel l'entrée est associée à une position (P1, P2, P3, P4, P5, P6, P7, P8) parmi une pluralité de positions (P1, P2, P3, P4, P5, P6, P7, P8) disposées sur un élément d'affichage (1, 2, 3, 4, 5, 6, 7, 9) et l'orientation de l'élément d'affichage (1, 2, 3, 4, 5, 6, 7, 9) est modifiée en fonction de la position (P1, P2, P3, P4, P5, P6, P7, P8).

11. Dispositif pour accuser réception d'une entrée à un utilisateur, comprenant :
- une unité de réception (12, 15) pour l'évaluation de l'entrée,
- une unité d'affichage (10) pour le montage dans un moyen de locomotion (20) et
- une unité de traitement (13), l'unité de traitement (13) étant configurée pour
- évaluer l'entrée,
- classifier l'entrée et, en fonction de la classe déterminée,
- modifier l'orientation d'une surface d'un élément d'affichage (1, 2, 3, 4, 5, 6, 7, 9) affiché sur l'unité d'affichage (10) et, après la finalisation de l'entrée,
- annuler (400) automatiquement la modification de l'orientation.

12. Dispositif selon la revendication 11, lequel est conçu pour exécuter un procédé selon l'une quelconque des revendications 1 à 10.

13. Produit de programme informatique comprenant des instructions, lesquelles, lorsqu'elles sont lues par un processeur programmable, configurent le processeur pour exécuter les étapes d'un procédé selon l'une quelconque des revendications 1 à 10.

14. Moyen de locomotion, en particulier véhicule (20), comprenant un dispositif selon l'une quelconque des revendications 11 ou 12.
